# EUROPEAN PATENT APPLICATION

(11) **EP 1 471 488 A1**
(43) Date of publication of application: **27.10.2004**
(21) Application number: 03734841.4
(22) Date of filing: 24.01.2003
(51) Int. Cl.: G09F 21/04, B41J 2/01

(54) **ADVERTISING METHOD USING DELIVERY TRUCK**

(30) Priority: 28.01.2002 JP 2002018735
(71) Applicant: Mastermind Co., Ltd., Shiojiri-shi, Nagano 399-0711 (JP)
(72) Inventor: OZAWA, Chizuo, c/o MASTERMIND CO., LTD., Shiojiri-shi, Nagano 399-0711 (JP)
(74) Representative: Klunker . Schmitt-Nilson . Hirsch
(86) International application number: PCT/JP2003/000698
(87) International publication number: WO 2003/065332

(57) **Abstract**

In a method of advertising using a delivery truck the present invention, a water-base ink image reception layer is formed on a surface of signboard materials (1 (1) to 1 (3)) constituted of cardboard or the like, desired advertising information is printed thereon using an inkjet printer and the printed surface is protected by a surface protection layer to thereby manufacture advertising signboards (10 (1) to 10 (3)). Next, the advertising signboards are removably attached to a side surface (14) of a van body (13) of a delivery truck (12). The use of the inkjet printer eliminates initial costs for items such as printing plate charges that in the prior art are essential items. Also, by using substrate treatment agents and surface treatment agents and the like, it is possible to produce advertising signboards using low-cost materials such as cardboard.

## Description

### BACKGROUND OF THE INVENTION

### Technical Field:

The present invention relates to a method of advertising using a delivery truck or the like whereby advertising is performed by attaching advertising signboards to the beds of delivery trucks or the sides of buses and the like and running these delivery trucks or buses. More particularly, the present invention relates to a method of advertising using a delivery truck or the like that enables advertising to be done at an economical cost and facilitates the production of advertising signboards carrying various types of information.

### Background Art:

With the many companies entering the physical distribution business in recent years, delivery trucks can be seen all over making deliveries ranging from long distance to local deliveries. Also, whether one goes to rural or urban areas, trucks are sure to be seen, operating on set routes, depending on the delivery operator, stopped here and there during load consolidation operations, and so forth. Therefore, the surface of van bodies of delivery trucks already seen on streets can be made to function as a large advertising space. Moreover, in cities, where there are many highrise buildings, the roofs of delivery trucks too can be seen from highrise buildings, and therefore can also be made to function as advertising space.

However, usually the van bodies of delivery trucks are printed with the delivery operator's company name or logo, or advertising message, so the fact is that almost none are used as advertising space.

In the past, it has been proposed to attach advertising signboards to the van body of delivery trucks. However, the fact is that this has hardly been used, for the following reasons.
1. The cost of printing the advertising media is very high.
2. Because of excessive durability requirements, the cost of signboard materials is high.
3. The poor power of advertising expression, making it impossible to render advertising that attracts attention.
   That is, when cutting sheet is employed, monotone expression is generally used, based on single-color lettering, markings and so forth. Also, illustration executed by signboard writers is a special skill, and while they can draw a photo-like picture, it is expensive. Moreover, with the spread of computers in recent years, the advertising image desired by the advertiser has been mostly a complex rendition or photo image, using a variety of colors. When it comes to producing that kind of advertisement, there is a limit as to what can be done manually using a conventional signboard writer.
4. Since the advertiser has had to shoulder the high production costs, he would hesitate even if he wanted to utilize it in short-term advertisements, which change at a bewildering speed.
5. The signboards attached to a truck van body have had to be designed to withstand wind and rain. Moreover, acrylic sheet or other such expensive material is employed for the fixed frame used to attach the signboards. Also, surface treatment such as lamination is used to protect the paper, film or other such surface of the signboard. Thus, signboards become very costly.
6. When the van bodies of delivery trucks are painted or cutting sheet is adhered thereto, in cases such as when the advertiser changes, it is not easy to return the body surface back to its original state. Also, the expenses mount up.

### Disclosure of Invention

In view of such points, a main object of the present invention is to provide a method of advertising using a delivery truck or the like that readily enables advertising expression that is complex and very low cost.

To achieve the above object, the method of advertising using a delivery truck or the like comprises
preparing signboard materials and advertising information,
producing an advertising signboard by using an inkjet printer to print the advertising information on a surface of the signboard material, using a water-base ink or oil-base ink or the like,
removably attaching the advertising signboard to a surface or roof of a van body of a delivery truck, a body surface or roof of a bus, a roof of a taxi or the like, and
performing advertising by means of the information carried by the advertising signboard, by running said delivery truck, bus or the like.

Here, when the surface of the signboard material is a water-repellent surface, generally an image printed with water-base ink using an inkjet printer cannot be fixed. In such cases, a water-base ink image reception layer can be formed on the water-repellent surface of the signboard material by applying a substrate treatment agent, and then using an inkjet printer to print directly on the material.

Also, in order to increase the durability and weather resistance of the printed image, after the printing has been executed using an inkjet printer, it is desirable to apply a surface treatment agent to the surface of the signboard material to form a protective film that at least protects the printed image of water-base ink from degradation from ultraviolet rays and/or rain.

As the material for the signboard, there can be used various types of material such as paper, wood, metal, ceramic, cloth, synthetic resin, rubber, and leather.

It goes without saying that the surface of the signboard material can be flat, irregular or perforated.

Next, to attach the signboard to the van body of a delivery truck or the like in a state that allows it to be removed, it is desirable to attach an advertising signboard insertion and removal frame to the surface of the delivery truck van body or the like into which the advertising signboard can be removably inserted in a direction parallel to said surface, and to use said advertising signboard insertion and removal frame to removably attach the advertising signboard to the surface of the delivery truck van body or the like.

Also, when fixing fittings are used to detachably affix the advertising signboard to the surface of the van body of the delivery truck or the like, when printing using the inkjet printer, it is desirable to also simultaneously print on the surface of the signboard material, marks that show the location of the fixing using the fixing fittings.

Moreover, in cases in which the advertising signboard is large, the advertising signboard can be produced divided into a plurality of boards by printing on a plurality of signboard materials, and attaching the advertising signboards in a line along the surface of the van body of the delivery truck or the like. The plurality of signboards can of course be printed with individual items of information and used as individual advertising signboards.

Next, a method can be employed in which a control means configured around a personal computer is used to control a scanner to read in images or other such information that, under the control of the control means, is then printed onto the surface of the advertising signboard material by using the inkjet printer. Printing information can be produced and printed out, without using a scanner, by utilizing image processing software or the like installed in the personal computer.

In the advertising method of the present invention, an advertising signboard is produced by using an inkjet printer to print desired advertising information on the surface of an advertising signboard material. This makes it unnecessary to incur the initial costs for items such as printing plate charges that in the prior art are essential items. Also, by using substrate treatment agents and surface treatment agents and the like, it is possible to produce advertising signboards using low-cost resources or recycled materials such as cardboard.

### Brief Description of Drawing

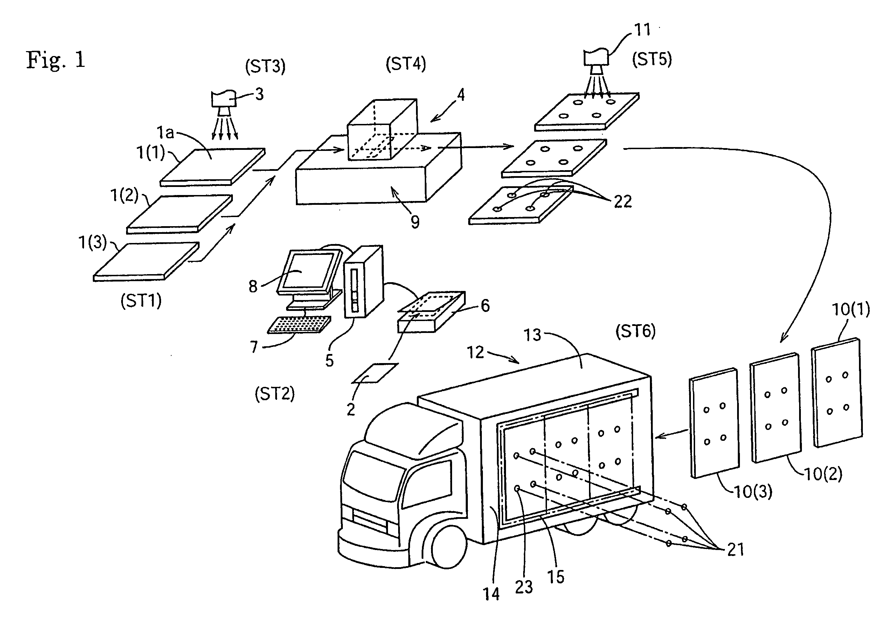

Figure 1 is a drawing for explaining an example of a method of advertising using a delivery truck that applies the present invention.

### Best Mode for Carrying Out the Invention

Below, an embodiment of the method of advertising using a delivery truck in which the present invention is applied is described, with reference to the drawing.

Figure 1 is a drawing for explaining the method of this embodiment. With reference to this drawing, in the advertising method of this embodiment which uses a delivery truck, first, a signboard material and advertising information are prepared (steps ST1 and ST2). As an example of the signboard material, three rectangular sheets of thick cardboard 1 (1), 1 (2), 1 (3) are prepared. It goes without saying that one sheet can be used, or four or more. Other signboard materials that can be used include wood, metal, ceramic, cloth, leather, synthetic resin, and rubber. It can have an irregular surface, or a perforated surface such as punched metal.

The advertising information can be an advertising copy 2 produced beforehand. The advertising copy 2 can be in the form of electronic information. For the advertising copy 2, there can be used a photograph, for example a photograph taken by an analogue camera, a positive film or negative film thereof, a photograph of a magazine catalogue, and so forth.

Next, using a spray gun 3, a substrate treatment agent is sprayed on a surface 1a of the signboard materials 1 (1) to 1 (3), to form a water-base ink image reception layer (step ST3). A roll-coater or the like can be used instead of the spray gun 3, or a brush can be used for the application. This process is of course not required in cases in which a material is used that has been coated beforehand with a water-base ink image reception layer. Also, in a case of signboard material having a water-repellent surface of plastic or metal or the like, an image reception layer having a prescribed water absorption property can be formed to fix the water-base ink on the surface.

Next, the advertising information of advertising copy 2 is printed on three sheets of signboard material 1 (1) to 1 (3), using inkjet printing system 4 (step ST4). The inkjet printing system 4 includes a personal computer 5, a scanner 6 for scanning in images, an input section 7 such as a keyboard, a display device 8 such as a CRT or liquid crystal display device, and an inkjet printer 9.

As the inkjet printer 9, it is desirable to use an inkjet printer (product number: MMP9001 R) manufactured and sold by the present applicant. This inkjet printer can print on the surface of material media that is 80 mm thick, 1118 mm wide and up to 2000 mm long.

In this embodiment, the image on the single sheet of advertising copy 2 that is a small size, such as A4 or B4 or the like, is divided and printed on the surface of three sheets of large-sized signboard material 1 (1) to 1 (3). Of course, in cases where an advertising space is not so large, it can be printed on the surface of one sheet of signboard material.

The scanner 6 is used to read in the image information of the advertising copy 2, which is then edited in the personal computer 5 and, by controlling the inkjet printer 9, is printed, divided into three parts, on the three sheets of signboard material 1 (1) to 1 (3).

With the method of this embodiment, when the advertising information is being printed, simultaneously marks 22 showing the attachment positions of fixing fittings 21 for attaching the advertising signboard are printed. For example, marks 22 are printed at four points on the surface of each of the advertising signboards 10 (1) to 10 (3).

Next, after being printed, a spray gun 11 or the like is used to coat the printed surface of the advertising signboards 1 (1) to 1 (3) with a surface treatment agent to form a protective film that blocks ultraviolet rays or has ultraviolet light absorption characteristics (step ST5). It is desirable for the formed protective film to be one that has weather resistance, water resistance and durability. The result of this is that an advertising signboard 10 is obtained divided into three pieces 10 (1) to 10 (3).

After the three advertising signboards 10 (1) to 10 (3) have been thus produced, the advertising signboards 10 (1) to 10 (3) are detachably attached to, for example, a side surface 14 of a van body 13 of a delivery truck 12 (step ST6). In this embodiment, screws or the like are used to attach a U-shaped insertion frame 15 to the side surface 14 of the van body 13 of the delivery truck 12. Adhesive tape or adhesive and the like can be used instead of screws. Between the insertion frame 15 and the side surface 14, there is formed an insertion groove into which the advertising signboards 10 (1) to 10 (3) can be inserted parallel to the side surface 14, from the rear end of the vehicle. It goes without saying that insertion can be from the front end, or from the top, or from the bottom.

In this embodiment, with each of the advertising signboards 10 (1) to 10 (3) in the inserted state, holes 23 for attaching the fixing fittings 21 are each formed on the side surface 14 of the delivery truck 12 at the locations of the marks 22 printed thereon.

The advertising signboard is placed into a state of attachment on the delivery truck 12 by inserting the advertising signboards 10 (1) to 10 (3) into the insertion frame 15 from the rear of the vehicle and fixing them to the side surface 14 of the delivery truck 12, using the fixing fittings 21 passed through the printed locations of the marks 22 on each of the advertising signboard 10 (1) to 10 (3), thereby preventing the signboards being blown off by the wind when the vehicle is moving around. By means of these three advertising signboards, the side surface 14 of the delivery truck 12 forms an advertising surface.

In the advertising method utilizing a delivery truck according to this embodiment, an inkjet printer manufactured and sold by the present applicant, that can print even on large-sized media surfaces, is used to print advertising information on the surface of a large-sized signboard material. This eliminates initial costs for items such as printing plate charges that in the prior art are essential items, and images, lettering and the like processed by a personal computer can be printed directly on the surface of the signboard material. This makes it possible to markedly lower the cost of producing advertising signboards, compared to the prior art.

In the present embodiment, moreover, the surface of the signboard material is coated with a substrate treatment agent, and after the printing, the surface is coated with a surface treatment agent. Selecting the appropriate agents makes it possible to use as a signboard material, a material having a high water absorption property or water-repellent surface unsuited for printing using water-base ink. Therefore the signboard material can be selected from among substantially any desired material, making it possible to use a signboard material that is cheaper compared to the prior art, enabling the advertising cost to be reduced.

As the substrate treatment agent and surface treatment agent, it is preferable to use those proposed by the present applicant (disclosed in JP2000-190462A, JP2000-301707A, JP2001-30615A).

In particular, in accordance with the present method, it is possible to use cardboard as the signboard material. Cardboard is a resource that can be recycled as trash, and it is lighter than the advertising signboard material generally used in the prior art, and easier to handle. It has also been confirmed that if a water-proofing agent is used as the surface treatment agent, it can last for around six months exposed to the outside, attached to the van body of a delivery truck.

### (Other modes of the embodiment)

In the above example a delivery truck is used, but the present invention can also be applied in the same way when the side of a bus or the like is used instead as the advertising space. The present invention can of course also be applied when a surface of a body of a vehicle other than a delivery truck or bus is used as the advertising space.

The construction for removably attaching the advertising signboard to the van body of a delivery truck or the like can, of course, also have a different composition from the above.

Moreover, although in the above example a substrate treatment agent and surface treatment agent are applied, one or both of these can of course be omitted depending on the surface properties of the signboard material employed. If oil-base ink (solvent ink) is used, printing can be done directly on the surface of a water-repellent material without using a substrate treatment agent.

The advertising signboard attachment surface of a delivery truck van body or the like can also be used as the advertising space or the like of, for example, a delivery company. That is, with the signboard not attached, the surface printed with an advertisement of the delivery company or the like is exposed, and when the signboard is attached, the advertisement is hidden by the signboard.

### Industrial Applicability

As described in the foregoing, in the method of advertising using a delivery truck or the like according to the present invention, an advertising signboard is produced using cardboard or the like as the signboard material on which advertising information is printed using an inkjet printer, and is removably attached to a delivery truck van body or the like to carry out advertising. Thus, in accordance with the advertising method of the present invention, unlike in the prior art, the expense of producing printing plates is eliminated, making it possible to carry out advertising at a markedly lower expenditure. It also has the merit of enabling advertising signboards with complex designs and the like to be produced in a short time, in response to the wishes of the advertiser.

Another merit is that, by applying a substrate treatment agent and/or a surface treatment agent, it is readily possible to utilize, as the signboard material, a material such as cardboard that is cheap, recyclable and easy to handle.

## Claims

1. A method of advertising using a delivery truck or the like, comprising
preparing signboard materials and advertising information,
producing an advertising signboard by using an inkjet printer to print the advertising information on a surface of the signboard material, using a water-base ink or oil-base ink or the like,
removably attaching the advertising signboard to a surface or roof of a van body of a delivery truck, a body surface or roof of a bus, a roof of a taxi or the like, and
performing advertising by means of the information carried by the advertising signboard, by running said delivery truck, bus or the like.

2. A method of advertising using a delivery truck or the like according to claim 1, **characterized in that**
the surface of the signboard material is a water-repellent surface,
a water-base ink image reception layer is formed on the water-repellent surface of the signboard material by applying a substrate treatment agent thereto,
an inkjet printer is then used to print in water-base ink.

3. A method of advertising using a delivery truck or the like according to claim 2, **characterized in that** after the printing has been executed using an inkjet printer, a surface treatment agent is applied to the surface of the signboard material to form a protective film that at least protects a printed image of water-base ink from degradation from ultraviolet rays and/or rain.

4. A method of advertising using a delivery truck or the like according to claim 1, **characterized in that** the signboard material is paper, wood, metal, ceramic, cloth, synthetic resin, rubber, or leather.

5. A method of advertising using a delivery truck or the like according to claim 1, **characterized in that** the surface of the signboard material is a flat surface, an irregular surface or a perforated surface.

6. A method of advertising using a delivery truck or the like according to claim 1, **characterized in that** an advertising signboard insertion and removal frame is attached to the surface of the delivery truck van body or the like into which the advertising signboard can be removably inserted in a direction parallel to said surface, and
said advertising signboard insertion and removal frame is used to removably attach the advertising signboard to the surface of the delivery truck van body or the like.

7. A method of advertising using a delivery truck or the like according to claim 1, **characterized in that** fixing fittings are used to detachably affix the advertising signboard to the surface of the van body of the delivery truck or the like,
and when printing using the inkjet printer, marks that show locations of the fixing using the fixing fittings are simultaneously printed on the surface of the signboard material.

8. A method of advertising using a delivery truck or the like according to claim 1, **characterized in that** the advertising signboard is produced divided into a plurality of boards by printing on a plurality of advertising signboards, and
the advertising signboards are attached in a line along the surface of the van body of the delivery truck or the like.

9. A method of advertising using a delivery truck or the like according to claim 1, **characterized in that** a control means configured around a personal computer is used to control a scanner to read in information such as images,
and, under the control of the control means, the information thus read in is then printed onto the surface of the advertising signboard material by using the inkjet printer.

10. A method of advertising using a delivery truck or the like according to claim 1, **characterized in that** the advertising signboard is produced by printing different information on each of the plurality of advertising signboards, and
the advertising signboards are attached in a line along the surface of the van body of the delivery truck or the like.

11. A method of advertising using a delivery truck or the like according to claim 1, **characterized in that** information such as images produced using a control means configured around a personal computer is printed on the surface of the signboard material by using the inkjet printer.
